# EUROPÄISCHE PATENTSCHRIFT

(11) **EP 1 411 283 B1**
(45) Veröffentlichungstag und Bekanntmachung des Hinweises auf die Patenterteilung: **19.11.2008**
(21) Anmeldenummer: 03023068.4
(22) Anmeldetag: 14.10.2003
(51) Int. Cl.: F16K 15/06, F16K 27/02

(54) **Hochdruckabdichtung für Gewindeeinsätze**
High pressure sealing for screw threaded cartridge
Joint d'étanchéité pour une cartouche filletée

(30) Priorität: 14.10.2002 DE 10247839
(43) Veröffentlichungstag der Anmeldung: 21.04.2004
(73) Patentinhaber: Stein, Günter, 89415 Lauingen (DE)
(72) Erfinder: Stein, Günter, 89415 Lauingen (DE)
(74) Vertreter: Herzog, Günter

(56) Entgegenhaltungen:
- WO-A-98/08615
- DE-A- 10 138 504
- US-A- 2 830 620
- US-A- 4 537 384
- PATENT ABSTRACTS OF JAPAN vol. 2000, no. 26, 1. Juli 2002 (2002-07-01) & JP 2001 248740 A (PACIFIC IND CO LTD), 14. September 2001 (2001-09-14)

## Beschreibung

### Stand der Technik

Die Erfindung geht aus von einer Hochdruckabdichtung für Gewindeeinsätze, beispielsweise Rückschlagventile für strömbare Medien, Druckschalter, Düsen, Abschlussstopfen u. a. nach der Gattung des Hauptanspruchs.

Bei einer bekannten gattungsgemäßen Hochdruckabdichtung ist wie bei der Erfindung von einem Rückschlagventil (DE OS 101 38 504) mit minimalen äußeren Einbaumaßen und einem möglichst großen Durchströmquerschnitt ausgegangen. Derartige kleine Rückschlagventile werden in Wände eingebaut, die Räume des strömbaren Mediums trennen, wobei in diese Einbauwände die Räume verbindende Bohrungen mit Gewinde vorhanden sind, in die diese Rückschlagventile schraubbar sind. Diese Rückschlagventile können in ihrer Funktion, also abhängig von beaufschlagter Fläche und Schließkraft, auch als Drucksteuerventil ausgebildet sein oder aber auch als fremdgesteuertes Ventil, bei dem das bewegliche Ventilglied über irgendeine Einrichtung entgegen der Schließkraft in Öffnungsrichtung betätigbar ist. Die Einbaulage des Ventilgehäuses ist durch einen Anschlag bestimmt, der sich bei oben genanntem bekannten Ventil durch eine Abstufung der Bohrung ergibt, wobei die sich zwischen der im Durchmesser größeren Gewindebohrung und der sich anschließenden glatten Bohrung bildende Schulter als Anschlag für die Stirnseite des Ventilsgliedes dient. Dieser Anschlag ist hier gleichzeitig Dichtfläche, weshalb die einander gegenüberliegenden Stirnflächen von Schulter der Bohrung und Ringfläche des Ventilgliedes konisch ausgebildet sind und die beiden Koni eine unterschiedliche Steigung aufweisen, um durch die damit gegebene Verkeilung eine bessere Dichtung zu erzielen.

Ein Problem solcher metallischer Dichtungen besteht darin, dass besonders bei statischer Druckbelastung strömbarer Medien die Dichtungen zwischen zwei harten, quasi sich lediglich linienförmig berührenden Flächen nicht ausreichend sind. Im Gegensatz zum Ventilsitz, bei dem der Druck der strömbaren Medien in Schließrichtung wirkt, belastet das strömbare Medium die statische Dichtung zwischen Einbauwand und Ventilgehäuse in trennender Weise, wobei sich gegebenenfalls Temperaturschwankungen zu Ungunsten einer solchen Dichtung auswirken können. Nicht zuletzt ist eine präzise Einbaulage bei konischen Flächen unterschiedlicher Steigung kaum möglich.

Es sind zwar einbaubare Rückschlagventile bekannt, allerdings weit größeren Durchmessers, bei denen die Ventilgehäuse sich stirnseitig an einer Stufe der Bohrung abstützen und zur Erzielung einer ausreichenden Dichtheit dazwischen Flachdichtungen eingesetzt sind. Abgesehen davon, dass auch hier kaum eine präzise Einbaulage erreichbar ist, sind diese Abdichtungen im Grunde kontraproduktiv, da der Druck der strömbaren Medien im Gegensatz beispielsweise zu einer radialdichtenden Rundschnurdichtung Einbauwand und Ventilgehäuse axial auseinander drängen.

Bekannt ist auch ein Ventil, das für erosive Flüssigkeiten im Hochdruckbereich eingesetzt wird und in dessen Gehäuse im Bereich des Durchtritts der Flüssigkeit ein Gewindeeinsatz eingeschraubt ist. Der Austritt des Gewindeeinsatzes wird mit einem metallischen Verschlussstopfen dichtet eine mit einem flexiben Dichtring versehen Busche zusätzlich den äußeren Bereich des Gewindeeinsatzes ab.US 2830620 offenbart eine solche Hochdruckabdichtung gemäß dem Oberbegriff des Anspruchs 1*.*

Abdichtprobleme treten aber nicht nur bei Ventilen auf, sondern bestehen überall da, wo in eine Wandung, die Räume unterschiedlicher Drücke trennt, Geräte oder Teile, z. B. Mess- und Anzeigeinstrumente, Druckschalter, Druck- der Temperatursensoren, Düsen, Absperrhähne u. a., eingeschraubt werden müssen. Insbesondere bei sehr kleinen Gewindeeinsätzen, deren Einbaulänge nicht selten die Dicke der Einbauwand kaum überschreitet, erfordert die Abdichtung einen erheblichen Aufwand.

### Die Erfindung und ihre Vorteile

Die erfindungsgemäße Hochdruckabdichtung mit den kennzeichnenden Merkmalen des Hauptanspruch hat demgegenüber den Vorteil, dass ohne notwendige Verlängerung der Gewindeeinsätze, im speziellen Fall des Ventilgehäuses eines Rückschlagventils, d.h. bei Beibehalten der minimierten Baulänge des Ventilgehäuses, und ohne zusätzlichen Kostenaufwand, einerseits eine hohe Dichtheit erzielbar ist und andererseits eine entgültige Einbaulage durch den von der Durchmesseränderung bewirkten Anschlag gegeben ist. Die Dichtheit wird durch die flächige Dichtpassung zwischen einem Mantelabschnitt des Gewindeeinsatzes und der diesem im eingeschraubten Zustand gegenüberliegenden Innenfläche der Bohrung der Einbauwand erzielt, wobei sich durch das Anziehen des Gewindeeinsatzes der Spalt zwischen diesem und der Einbauwand gegen Null verkleinert. Die Besonderheit dieser Art der Abdichtung besteht darin, dass sie in Einschraubrichtung vor dem Gewinde liegt. Das hat auch fertigungstechnische Vorteile, denn die Dicht- und Anschlagflächen lassen sich leichter bearbeiten, da sie unmittelbar hinter der Öffnung der Einbauwand liegen.

Die Dichtheit der Hochdruckabdichtung ist dadurch erhöht, dass in dem Bereich der flächigen Dichtpassung des Gehäuses des Gewindeeinsatzes eine Nut zur Aufnahme eines Rundschnurringes vorgesehen ist. Dadurch, dass sich beim Anziehen des Gewindeeinsatzes der Spalt zwischen diesem und der Einbauwand gegen Null verkleinert, kann der Rundschnurring auch bei anliegendem Hochdruck, z. B. bei Drücken größer 100 bar, nicht in den Dichtspalt gedrückt werden. Bei der zusätzlichen Verwendung eines Rundschnurringes werden an die flächige Dichtpassung keine hohen Genauigkeitsanforderungen gestellt, da die Dichtung bei dieser Variante durch den Rundschnurring gewährleistet wird. Die Dichtpassung muss lediglich nach dem Anziehen des Gewindeeinsatzes spaltfrei sein.

Nach einer weiteren vorteilhaften Ausgestaltung der Erfindung ist die Durchmesseränderung von Gewinde und Bohrung im Bereich der Dichtpassung stufenförmig, d. h. die Durchmesseränderung bildet eine Stufe. Dieser stufenförmige Anschlag hat den Vorteil, dass eine äußerst präzise endgültige Einbaulage erreicht wird, ohne dass an dieser Stelle eine Dichtheit vorhanden sein muss.

Nach einer weiteren vorteilhaften Ausgestaltung der Erfindung wird die Anschlagstufe einerseits von der Nut des Rundschnurringes begrenzt und andererseits vom Übergang dieser Nutbegrenzung zum Gewindeabschnitt des Gewindeeinsatzes. Hierbei kann es sich um einen konischen überging oder aber einen quer zur Strömungsrichtung verlaufenden Anschlag handeln - maßgebend ist, dass es sich um einen relativ kurzen Abschnitt handelt, um dadurch die Baulänge von Gewindeeinsatz und Einbauwandung nicht unnötig zu verlängern.

Nach einer weiteren vorteilhaften Ausgestaltung der Erfindung verringert sich der Durchmesser der Bohrung im Bereich der Dichtpassung in Einschraubrichtung kontinuierlich und in gleicher Weise der gegenüberliegende Wandungsabschnitt des Gewindeeinsatzes. Die Einengung wirkt quasi wie ein Anschlag. Dadurch kann auf einen separaten stufenartigen Anschlag zwischen Gewinde und Dichtpassung verzichtet werden, so dass sich die Einbaulänge des Gewindeeinsatzes nochmals verkürzen lässt.

Bei einer diesbezüglichen vorteilhaften Ausgestaltung der Erfindung ist die Durchmesseränderung der Bohrung im Bereich der Dichtpassung ein Innenkonus, an den sich die in diesem Bereich mit dem komplementären Außenkonus versehene Fläche des Gewindeeinsatzes beim Einschrauben glatt anlegt. Derartige konische Innen- und Außenflächen lassen sich auf einfache Weise herstellen.

Bei einer anderen diesbezüglichen Ausgestaltung der Erfindung ist die Durchmesseränderung der Bohrung im Bereich der Dichtpassung als Innenfläche eines Kugelabschnitts ausgebildet, an die sich die in diesem Bereich mit einer komplementären Kugelkalotte versehene Fläche des Gewindeeinsatzes beim Einschrauben glatt anlegt. Der gemeinsame Radius beider Flächen hat dabei seinen Mittelpunkt im Schnittpunkt der Achse der Bohrung mit der dem Gewinde abgewandten Stirnseite des Gewindeeinsatzes. Wie oben bereits erwährt, können die konische bzw. die kugelabschnittsförmige Passungsaußenfläche des Gewindeeinsatzes eine Nut zur Aufnahme eines Rundschnurtinges aufweisen, um dadurch die Dichtheit der Hochdruckabdichtung noch zu erhöhen.

Nach einer zusätzlichen vorteilhaften Ausgestaltung der Erfindung hat der Abschnitt der flächigen Dichtpassung der Bohrung einen größeren Durchmesser als der Gewindedurchmesser von Gewindeeinsatz und der diesen aufnehmenden Bohrung. Hierbei liegt der Vorteil vor allem darin, dass die Dichtpassung vor dem Gewinde, also nahe der Öffnung der Einbauwand liegt, was die Fertigung wesentlich vereinfacht. Auch bei verhältnismäßig kleinen Gewindeeinsätzen, wie z. B. sehr kleinen Baugrößen von Rückschlagventilen, ist die Fertigung der Dichtpassung sowie, im Fall der Verwendung eines Rundschnurringes, die Herstellung der diesen aufnehmenden Nut gut beherrschbar. Auch der Einbau derartig kleiner Gewindeeinsätze wird durch diese Ausführung der Erfindung erleichtert.

Nach einer diesbezüglichen vorteilhaften Ausgestaltung der Erfindung ist die Bohrung im Anschluss an den Passungsabschnitt und auf der in Bezug auf die Nut dem Gewinde abgewandte Seite leicht konisch (15 Grad) ausgebildet, um beim Einbau des Gewindeeinsatzes das Einführen des Rundschnurrings in den Passungsabschnitt zu vereinfachen.

Nach einer anderen vorteilhaften Ausgestaltung der Erfindung weist der Abschnitt der flächigen Dichtpassung der Bohrung und die ihm gegenüberliegende Nut für den Rundschnurring einen kleineren Durchmesser auf, als der Durchmesser des Gewindes. Dies kann bei gewissen Einbaulagen erforderlich sein, wenn z. B. ein Rückschlagventil in Strömungsrichtung eingebaut wird und nur von dieser Seite her zugänglich ist. In diesem Fall befinden sich Anschlag und Dichtfläche hinter dem Gewinde.

Bei einer diesbezüglichen Ausgestaltung der Erfindung ist die den Anschlag bildende Stufenfläche zwischen Gewindeabschnitt und Passungsabschnitt der Bohrung der Einbauwand leicht abgerundet, um einen erleichterten Einbau des Rundschnurrings zu erzielen. Dadurch, dass diese Stufenfläche als Anschlag einen Presssitz bildet, kann der Rundschnurring in diesem Bereich nicht durchgedrückt werden, auch nicht bei verhältnismäßig hohen Drücken.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung sind vier Ausführungsbeispiele des Gegenstandes der Erfindung und ein nicht erfindungsgemäßes Beispiel dargestellt und im folgenden näher beschrieben, wobei in allen Beispielen ein Rundschnurring in die flächige Dichtpassung eingesetzt ist. Es zeigen:
- Fig. 1: eine erfindungsgemäße Hochdruckabdichtung am Beispiel eines Rückschlagventils im Längsschnitt
- Fig. 2: eine Variante dieses Ventils im Längsschnitt
- Fig. 3: ein zweites nicht erfindungsgemäßes Beispiel im Längsschnitt,
- Fig. 4: eine Ausgestaltung dieses Beispiels in vergrößertem Maßstab,
- Fig. 5: ein drittes Ausführungsbeispiel im Längsschnitt
- Fig. 6: ein viertes Ausführungsbeispiel im Längsschnitt und
- Fig. 7: ein fünftes Ausführungsbeispiel mit zwei Rückschlagventilen in einer Gewindebohrung.

### Beschreibung der Ausführungsbeispiele

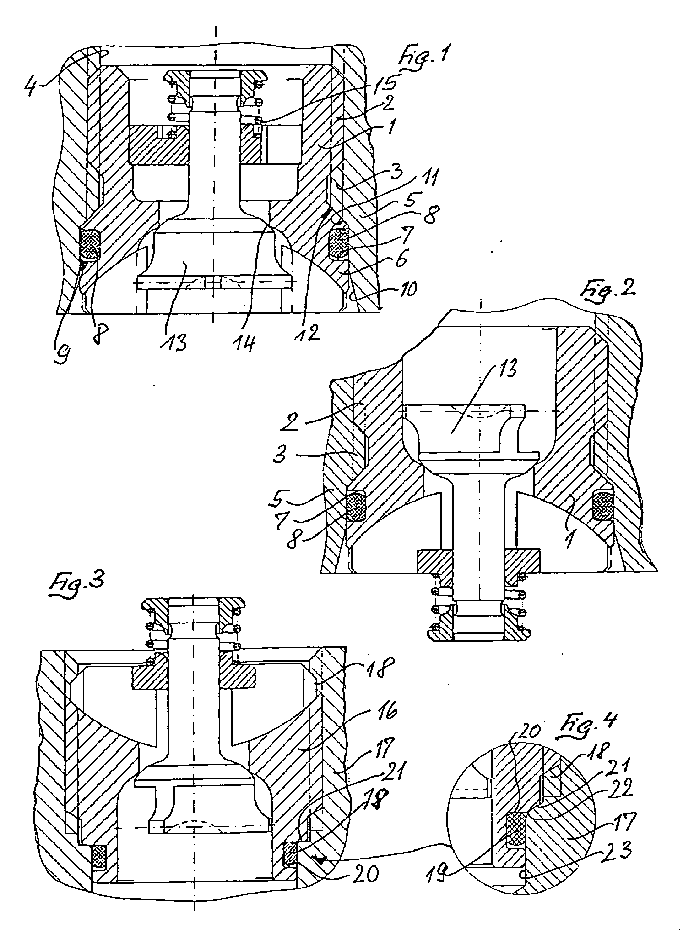

In Fig. 1 ist ein erfindungsgemäßes Rückschlagventil im Längsschnitt beschrieben mit einem Ventilgehäuse 1, das über ein Außengewinde 2 in ein Innengewinde 3 einer Bohrung 4 einer Einbauwand 5 geschraubt ist, wobei das Ventilgehäuse 1 einen Abschnitt 6 aufweist, der einen größeren Durchmesser als der Durchmesser des Außengewindes 2 ausweist und in dem eine umlaufende Nut 7 angeordnet ist, die einen Rundschnurring 8 aufnimmt. Dieser Rundschnurring 8 stößt mit seiner Außenseite auf einen Passungsbohrungsabschnitt 9 der Bohrung 4, mit dem er zur Abdichtung zusammenwirkt. Außerdem weist die Bohrung 4 von der Einbauseite des Ventilgehäuses 1 her einen Konus 10 auf, um dadurch beim Einbau des Ventilgehäuses 1 in die Einbauwand 5 eine Erleichterung beim Einführen des Rundschnurrings 8 in den Passungsbohrungsabschnitt 9 zu erhalten.

Zwischen dem Passungsbohrungsabschnitt 9 und dem Innengewinde 3 ist eine Anschlagfläche 11 vorgesehen, auf die zur Bestimmung der Einbaulage des Ventilgehäuses 1 in der Bohrung 4 eine Ringfläche 12 des Ventilgehäuses 1 stößt, die zwischen dem Außengewinde 2 und dem Außenumfang des Abschnitts 6 gebildet wird. Anschlagfläche 11 und Ringfläche 12 dienen somit als Anschlag des Ventilgehäuses 1, bei dessen Einbau in die Einbauwand 5. Nach Einbau des Ventilgehäuses 1 besteht an dieser Stelle somit eine Pressverbindung. Die beim Zusammenbau entstehenden Kräfte werden insbesondere durch den Ringabschnitt des Ventilgehäuses 1 aufgenommen, der einerseits durch die radiale Nutwand der Nut 7 und andererseits durch die Ringfläche 12 gebildet wird. Auch bei hohen Drücken wird auf Grund dieser Pressverbindung verhindert, dass der Rundschnurring 8 hier zum Gewinde hin durchgedrückt wird.

Das eigentliche Rückschlagventil ist im Ventilgehäuse 1 angeordnet in Form des beweglichen Ventilgliedes 13, einem mit dem Ventilgehäuse 1 gemeinsamen Ventilsitz 14 und einer Schließfeder 15.

Bei der in Fig. 2 gezeigten Variante dieses Rückschlagventils ist lediglich das bewegliche Ventilglied 13 in umgekehrte Öffnungsrichtung in Bezug auf das Ventilgehäuse 1 angeordnet. Alle anderen Bauteile, insbesondere der Aufbau des Ventilgehäuses 1 mit seinem Außengewinde 2 und die Einbauwand 5 mit dem Innengewinde 3, sowie Nut 7 und Rundschnurring 8 entsprechend in ihrem Aufbau dem in Fig. 1 dargestellten Rückschlagventil. Lediglich durch die Lage des Rundschnurrings 8 in der Nut 7 ist erkennbar, dass der Hochdruck von der anderen Seite her kommt. Die für den Einbau des Rückschlagventils gegebenen Vorbedingungen sind jedoch die gleichen.

In Fig. 3 ist ein nicht erfindungsgemäßes Beispiel gezeigt, bei dem der Einbau des Ventilgehäuses 16 in die Einbauwand 17 von der Seite des Gewindes 18 her erfolgt. Hierdurch kann es notwendig sein, die Rundschnurdichtung 19 und deren Nut 20 zuerst einzuführen, bevor dann das Gewinde 18 greift. Auch hier ist der Presssitz 21, der als Anschlag dient, zwischen der Nut 20 und dem Gewinde 18 angeordnet. Bei dieser Variante befinden sich der Presssitz 21 und die Rundschnurdichtung 19 hinter dem Gewinde 18. Die Dichtpassung befindet sich in einem von der Materialstärke her gesehen sehr kritischen Bereich des Ventilgehäuses. Die Reduzierung der Materialstärke ist hier durch die konstruktive Notwendigkeit des als Anschlag dienenden Presssitzes 21 bedingt, der den Innendurchmesser der Passungsbohrung 23 und dementsprechend auch den Durchmesser des Ventilgehäuses 16 im Bereich seiner Nut 20 verringert.

Wie in Fig. 4 gezeigt kann der Übergang 22, insbesondere auf der Seite der Einbauwand 17, abgerundet ausgebildet sein, um dadurch die Rundschnurdichtung 19 leichter in die Passungsbohrung 23 der Einbauwand 17 einführen zu können.

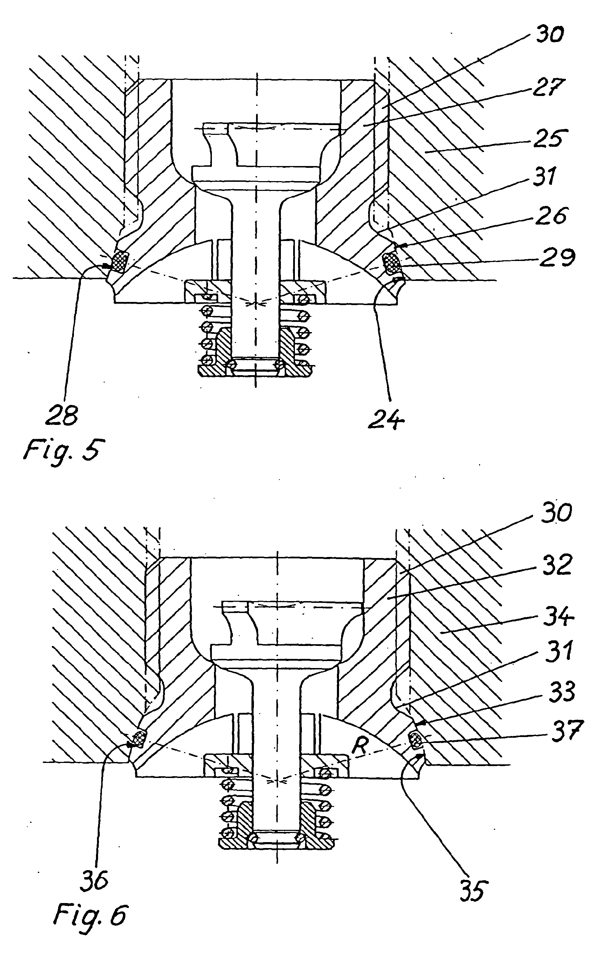

Während in den beiden vorhergehendenBeispielen die Hockdruckabdichtung des Rückschlagventils durch eine Pressverbindung in Form einer separaten als Stufe ausgebildeten Anschlagfläche 11, an der eine Ringfläche 12 des Ventilgehäuses 1, 16 nach dem Einschrauben desselben in die Einbauwand 5, 17 anliegt, realisiert wurde, dient in der in Fig. 5 gezeigten dritten Variante eine konische Innenfläche 24 einer Einbauwand 25 als Anschlag für eine die gleiche Steigung aufweisende konische Außenfläche 26 eines Ventilgehäuses 27. In die konische Außenfläche 26 ist im vorliegenden Beispiel eine Nut 28 zur Aufnahme einer Rundschnurdichtung 29 eingearbeitet. Wie in dem ersten Ausführungsbeispiel weist das Ventilgehäuse 27 zwischen der Nut 28 und seinem Gewinde 30 eine Ausdrehung 31 auf, die hier jedoch nicht mit einer Anschlagfläche versehen ist, sondern den notwendigen Freiraum zum Einschrauben des Ventilgehäuses 27 in die Einbauwand 25 schafft, damit der Presssitz tatsächlich zwischen den konischen Flächen 24 und 26 zustande kommt, bevor das Ventilgehäuse 27 mit der von seiner konischen Außenfläche 26 gebildeten Kante das Gewinde der Einbauwand 25 erreicht.

Im Unterschied zu dem dritten Ausführungsbeispiel zeigt Fig. 6 eine Hochdruckabdichtung für ein Rückschlagventil mit einem Ventilgehäuse 32, das im Bereich des Presssitzes eine kugelabschnittsförmige Außenfläche 33 aufweist, die beim Einschrauben des Ventilgehäuses 32 in die Einbauwand 34 an deren den gleichen Radius R wie die kugelabschnittsförmige Außenfläche 33 aufweisenden konkav gewölbten Innenfläche 35 anschlägt. In die kugelabschnittsförmige Außenfläche 33 ist auch hier eine Nut 36 zur Aufnahme einer Rundschnurdichtung 37 eingearbeitet. Für die Ausdrehung 31 zwischen Presssitz und Gewinde 30 gilt das Gleiche wie bereits zu Fig. 5 erläutert, wobei der Presssitz in dieser Variante, wie oben beschrieben, beim Aufeinandertreffen der kugelabschnittsförmigen Außenfläche 33 auf die konkav gewölbte Innenfläche 35 entsteht. Der Nachteil des gegenüber der Herstellung eines Konus etwas erhöhten Fertigungsaufwandes für gewölbte Flächen wird wiederum durch den Vorteil einer exakter bestimmten Einbaulage des Rückschlagventils in der Einbauwand 34 ausgeglichen.

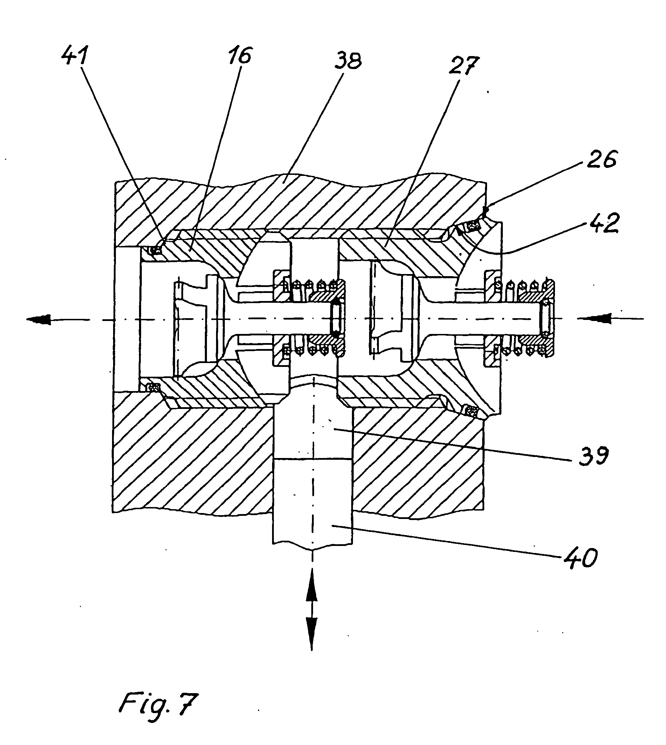

Fig. 7 zeigt eine Variante des Einbaus von zwei Rückschlagventilen in eine Gewindebohrung eines Gehäuses 38 mit einer radialen Öffnung 39, in der ein Kolben 40 geführt ist. Die Bewegungsrichtungen des Kolbens 40 sind durch einen Doppelpfeil, die Strömungsrichtung des Mediums durch die beiden Pfeile in der Achse der Gewindebohrung angedeutet. Eine derartige Kombination kann beispielsweise in Hydraulikkolbenpumpen angewendet werden. In dieser Darstellung wurden die Bezugszahlen in Anlehnung an die Beispiele zwei (Fig. 3 und 4) und drei (Fig. 5) verwendet, da diese beiden Varianten hier zum Einsatz gelangen. Die beiden Ventilgehäuse 16, 27 werden von der gleichen Seite in das Gehäuse 38 eingeschraubt, wobei das zuerst einzuschraubende Ventilgehäuse 16 gemäß dem zweiten Beispiel in Fig. 3 an einem exakt definierten Anschlag 41 in dem Gehäuse 38 anschlägt. Demgegenüber ist das Ventilgehäuse 27 entsprechend der in dem dritten Ausführungsbeispiel in Fig. 5 gezeigten Variante ausgeführt. Als Presssitz und Anschlag für das zweite Rückschlagventil dient hier also die konische Innenfläche 42 in dem Gehäuse 38, an der sich beim Einschrauben des Ventilgehäuses 27 dessen konische Außenfläche 26 anlegt. Beide Dichtpassungen sind wie in den Beispielen zwei und drei mit einer Rundschnurdichtung versehen.

### Bezugszahlenliste

- 1: Ventilgehäuse
- 2: Außengewinde
- 3: Innengewinde
- 4: Bohrung
- 5: Einbauwand
- 6: Abschnitt
- 7: Nut
- 8: Rundschnurring
- 9: Passungsbohrungsabschnitt
- 10: Konus
- 11: Anschlagfläche
- 12: Ringfläche
- 13: bewegliches Ventil
- 14: Ventilsitz
- 15: Schließfeder
- 16: Ventilgehäuse
- 17: Einbauwand
- 18: Gewinde
- 19: Rundschnurdichtung
- 20: Nut
- 21: Presssitz
- 22: Übergang
- 23: Passungsbohrung
- 24: konische Innenfläche
- 25: Einbauwand
- 26: konische Außenfläche
- 27: Ventilgehäuse
- 28: Nut
- 29: Rundschnurdichtung
- 30: Gewinde
- 31: Ausdrehung
- 32: Ventilgehäuse
- 33: kugelabschnittsförmige Außenfläche
- 34: Einbauwand
- 35: konkav gewölbte Innenfläche
- 36: Nut
- 37: Rundschnurdichtung
- 38: Gehäuse
- 39: Radiale Öffnung
- 40: Kolben
- 41: Anschlag
- 42: konische Innenfläche
- R: Radius

## Patentansprüche

1. Hochdruckabdichtung umfassend eine Einbauwand und einen Gewindeeinsatz,
- der in eine ein Innengewinde aufweisende Bohrung der Einbauwand einschraubbar ist, bis er
- an einem die axiale Einbaulage des Gewindeeinsatzes bestimmenden Anschlag zwischen Gewindeeinsatz und Einbauwand anliegt,
- wobei der Anschlag durch eine Reduzierung des Durchmessers der Bohrung der Einbauwand gebildet wird,
- wobei in Einschraubrichtung axial hinter dem Gewinde (2, 30) des Gewindeeinsatzes radial zwischen einem Abschnitt (6) des Gehäuses (1, 27, 32) des Gewindeeinsatzes einerseits und einem in eingebautem Zustand gegenüberliegenden Wandabschnitt der Bohrung (4) der Einbauwand (5, 25, 34) andererseits eine flächige Dichtpassung (9) vorhanden ist, wobei die Dichtpassung (9) einen größeren Durchmesser als der Gewindedurchmesser von Gewindeeinsatz (1) und der diesen aufnehmenden Bohrung (4) aufweiset,
- und wobei sich der Durchmesser des Gehäuses (1, 27, 32,) des Gewindeeinsatzes und der Durchmesser der Bohrung (4) der Einbauwand (5, 25, 34) im Bereich der flächigen Dichtpassung (9) in Einschraubrichtung verringert, **dadurch gekennzeichnet,dass** in dem Bereich der flächigen Dichtpassung (9) des Gehäuses (1, 27, 32,) des Gewindeeinsatzes eine Nut (7, 28, 36) zur Aufnahme für einen Rundschnurring (8, 29, 37) vorgesehen ist.

2. Hochdruckabdichtung nach Anspruch 1,
**dadurch gekennzeichnet,**
**dass** die Durchmesserverringerung von Gehäuse (1) und Bohrung (4) im Bereich der Dichtpassung (9) stufenförmig ist und **dadurch** eine Anschlagstufe (12) bildet.

3. Hochdruckabdichtung nach Anspruch 1,
**dadurch gekennzeichnet,**
**dass** die Durchmesserverringerung von Gehäuse (27, 32) und Bohrung (4) im Bereich der Dichtpassung (9) kontinuierlich ist.

4. Hochdruckabdichtung nach Anspruch 3,
**dadurch gekennzeichnet,**
**dass** die Durchmesserverringerung von Gehäuse (27, 32) und Bohrung (4) im Bereich der Dichtpassung (9) konisch ist.

5. Hochdruckabdichtung nach Anspruch 3,
**dadurch gekennzeichnet,**
**dass** die Durchmesserverringerung von Gehäuse (32) und Bohrung
(4) der Einbauwand (34) im Bereich der Dichtpassung (9) gekrümmt ist und der Krümmungsradius (R) einen Mittelpunkt aufweist, der sich im Schnittpunkt der Achse der Bohrung (4) mit der dem Gewinde (30) abgewandten Stirnseite des Gewindeeinsatzes (32) befindet.

6. Hochdruckabdichtung nach Anspruch 1,
**dadurch gekennzeichnet,**
**dass** die Bohrung (10) vor der Dichtpassung (9) und auf der in Bezug auf die Nut (7) dem Gewinde (2) abgewandten Seite leicht konisch (15°) ausgebildet ist.

## Claims

1. A high pressure sealing comprising a panel and a screw threaded cartridge,
- which can be screwed into a hole of the panel encompassing a female screw thread until it
- abuts on a stop between screw threaded cartridge and panel, which determines the axial mounting position of the screw threaded cartridge,
- wherein the stop is formed by a reduction of the diameter of the hole of the panel,
- wherein a flat seal fitting (9) is available in screwing direction axially downstream from the thread (2, 30) of the screw threaded cartridge radially between a section (6) of the housing (1, 27, 32) of the screw threaded cartridge on the one hand and a wall section of the hole (4) of the panel (5, 25, 34) located opposite in the mounted state on the other hand, wherein the seal fitting (9) encompasses a larger diameter than the thread diameter of screw threaded cartridge (1) and the hole (4) accommodating said screw threaded cartridge (1),
- and wherein the diameter of the housing (1, 27, 32) of the screw threaded cartridge and the diameter of the hole (4) of the panel (5, 25, 34) decreases in the region of the flat seal fitting (9) in screwing direction,
**characterized in**
**that** provision is made in the region of the flat seal fitting (9) of the housing (1, 27, 32) of the screw threaded cartridge for a groove (7, 28, 36) for accommodating a round cord ring (8, 29, 37).

2. The high pressure sealing according to claim 1,
**characterized in**
**that** the diameter reduction of housing (1) and hole (4) in the region of the seal fitting (9) is step-like and thus forms a stop step (12).

3. The high pressure sealing according to claim 1,
**characterized in**
**that** the diameter reduction of housing (27, 32) and hole (4) in the region of the seal fitting (9) is continuous.

4. The high pressure sealing according to claim 3,
**characterized in**
**that** the diameter reduction of housing (27, 32) and hole (4) in the region of the seal fitting (9) is conical.

5. The high pressure sealing according to claim 3,
**characterized in**
**that** the diameter reduction of housing (32) and hole (4) of the panel (34) in the region of the seal fitting (9) is curved and that the radius of curvature (R) encompasses a center, which is located in the intersection point of the axis of the hole (4) with the front face of the screw threaded cartridge (32) facing away from the thread (30).

6. The high pressure sealing according to claim 1,
**characterized in**
**that** the hole (10) is embodied so as to be slightly conical (15°) upstream of the seal fitting (9) and on the side facing away from the thread (2) with reference to the groove (7).

## Revendications

1. Fermeture étanche à haute pression, comprenant une paroi et de filetage,
- pouvant être vissé dans un perçage de la paroi de montage comportant un filetage interne, jusqu'à ce qu'il
- s'applique sur une butée déterminant la position de montage axiale de l'insert fileté, située entre l'insert fileté et la paroi de montage,
- la butée étant formée par une diminution du diamètre du perçage de la paroi de montage,
- un ajustement d'étanchéité (9) surfacique étant prévu dans le sens de vissage, axialement derrière le filetage (2, 30) de l'insert fileté, radialement entre un tronçon (6) du boîtier (1, 27, 32) de l'insert fileté d'une part, et un tronçon de paroi du perçage (4) de la paroi de montage (5, 25, 34) d'autre part, l'ajustement d'étanchéité (9) présentant un diamètre supérieur à celui du filetage de l'insert fileté (1) et à celui du perçage (4) recevant celui-ci,
- et le diamètre du boîtier (1, 27, 32) de l'insert fileté ainsi que le diamètre du perçage (4) de la paroi de montage (5, 25, 34) diminuant dans la région de l'ajustement d'étanchéité surfacique (9) dans le sens de vissage,
**caractérisée en ce que**
une rainure (7, 28, 36) destinée à recevoir un joint torique (8, 29, 37) est prévue dans la région de l'ajustement d'étanchéité surfacique (9) du boîtier (1, 27, 32) de l'insert fileté.

2. Fermeture étanche à haute pression selon la revendication 1,
**caractérisé en ce que**
la diminution du diamètre du boîtier (1) et du perçage (4) dans la région de l'ajustement d'étanchéité (9) est réalisée par paliers et forme donc un palier de butée (12).

3. Fermeture étanche à haute pression selon la revendication 1,
**caractérisé en ce que**
la diminution de diamètre du boîtier (27, 32) et du perçage (4) dans la région de l'ajustement d'étanchéité (9) est continue.

4. Fermeture étanche à haute pression selon la revendication 1,
**caractérisée en ce que**
la diminution de diamètre du boîtier (27, 32) et du perçage (4) dans la région de l'ajustement d'étanchéité (9) est conique.

5. Fermeture étanche à haute pression selon la revendication 3,
**caractérisée en ce que**
la diminution de diamètre du boîtier (32) et du perçage (4) de la paroi de montage (34) dans la région de l'ajustement d'étanchéité (9) est courbée et **en ce que** le rayon de courbure (R) présente un point central situé au niveau du point d'intersection entre l'axe du perçage (4) et la face frontale de l'insert fileté (32) qui est détournée du filetage (30).

6. Fermeture étanche à haute pression selon la revendication 1,
**caractérisée en ce que**
le perçage (10) est conçu de façon sensiblement conique (15°) en amont de l'ajustement d'étanchéité (9) et sur le côté détourné du filetage (2) par rapport à la rainure (7).
